# EUROPEAN PATENT APPLICATION

(11) **EP 4 498 444 A1**
(43) Date of publication of application: **29.01.2025**
(21) Application number: 24187594.7
(22) Date of filing: 10.07.2024
(51) Int. Cl.: H01M 4/131, H01M 4/62, H01M 4/66, H01M 10/0525

(54) **ELECTRODE FOR RECHARGEABLE LITHIUM BATTERY AND RECHARGEABLE LITHIUM BATTERY INCLUDING THE SAME**

(30) Priority: 28.07.2023 KR 20230099116
(71) Applicant: Samsung SDI Co., Ltd, Gyeonggi-do 17084 (KR)
(72) Inventor: CHOI, Jewon, 17084 Gyeonggi-do (KR); MOON, Jeunggi, 17084 Gyeonggi-do (KR); KIM, Suhyun, 17084 Gyeonggi-do (KR)
(74) Representative: Michalski Hüttermann & Partner Patentanwälte mbB

(57) **Abstract**

Disclosed are an electrode for a rechargeable lithium battery and a rechargeable lithium battery including the same, the electrode including a current collector; a conductive coating layer on the current collector; and an active material layer on the conductive coating layer, wherein the conductive coating layer includes a conductive material; a binder; and a compound including a catechol functional group, a quinone functional group, or a combination thereof.

## Description

### BACKGROUND

### 1. Field

An electrode for a rechargeable lithium battery and a rechargeable lithium battery including the same are disclosed.

### 2. Description of the Related Art

Recently, with the rapid spread of electronic devices that use batteries, such as mobile phones, laptop computers, and electric vehicles, the demand for rechargeable batteries having high energy density and high capacity is rapidly increasing. Accordingly, research and development to improve the performance of rechargeable lithium batteries is actively underway.

A rechargeable lithium battery includes a positive electrode and a negative electrode including an active material capable of intercalating and deintercalating lithium ions, and an electrolyte, and electrical energy is produced through oxidation and reduction reactions if lithium ions are intercalated/deintercalated from the positive electrode and negative electrode.

In order to increase conductivity (e.g., electrical conductivity) of the positive electrode and/or the negative electrode, a conductive coating layer (e.g., an electrically conductive coating layer) may be provided between the current collector and the active material layer.

The conductive coating layer may be formed by coating a conductive slurry (e.g., an electrically conductive slurry) including a conductive material (e.g., an electrically conductive material) and a binder on a current collector and the binder may be CMC, PVdF, etc.

However, binders such as CMC and PVdF have low adhesive strength, and thus in order to exhibit sufficient adhesive strength, an amount of binder used may be increased, and an amount of conductive material used accordingly decreases. Ultimately, as long as CMC and PVdF binders are used, the adhesive strength and conductivity of the conductive coating layer are in a trade-off relationship.

### SUMMARY

Some embodiments of the present disclosure provide an electrode for a rechargeable lithium battery that has excellent adhesive strength and conductivity (e.g., electrical conductivity).

Some embodiments provide a rechargeable lithium battery including the electrode.

Some embodiments provide an electrode for a rechargeable lithium battery including a current collector; a conductive coating layer (e.g., an electrically conductive coating layer) on the current collector; and an active material layer on the conductive coating layer, wherein the conductive coating layer includes a conductive material (e.g., an electrically conductive material); a binder; and a compound including a catechol functional group, a quinone functional group, or a combination thereof.

Some embodiments provide a rechargeable lithium battery including the electrode.

The electrode according to some embodiments can exhibit excellent adhesive strength and conductivity (e.g., electrical conductivity). Accordingly, the rechargeable lithium battery including the electrode according to some embodiments can exhibit excellent cycle-life characteristics by minimizing or reducing an increase in resistance (e.g., electrical resistance) and a decrease in energy density during operation.

### BRIEF DESCRIPTION OF THE DRAWINGS

The accompanying drawings, together with the specification, illustrate embodiments of the subject matter of the present disclosure, and, together with the description, serve to explain principles of embodiments of the subject matter of the present disclosure.
FIG. 1 is a perspective schematic view showing a rechargeable lithium battery according to some embodiments.
FIG. 2 is a graph showing the capacity according to the number of cycles for the rechargeable lithium battery cells of Example 1 and Comparative Examples 1 and 2.
FIG. 3 is a graph showing results of measuring EIS at room temperature after charging for the rechargeable lithium battery cells of Example 1 and Comparative Examples 1 and 2.

### DETAILED DESCRIPTION

Hereinafter, embodiments of the present disclosure will be described in more detail. However, these embodiments are examples, the present disclosure is not limited thereto and the present disclosure encompasses the scope of the appended claims, and equivalents thereof.

As used herein, if a specific definition is not otherwise provided, it will be understood that if an element such as a layer, film, region, or substrate is referred to as being "on" another element, it can be directly on the other element or intervening elements may also be present.

As used herein, if specific definition is not otherwise provided, the singular may also include the plural. In addition, unless otherwise specified, "A or B" may mean "including A, including B, or including A and B."

As used herein, "combination thereof" may mean a mixture of constituents, a stack, a composite, a copolymer, an alloy, a blend, and/or a reaction product.

As used herein, if a definition is not otherwise provided, a particle diameter may be an average particle diameter. The particle diameter means an average particle diameter (D50), which is a diameter of particles with a cumulative volume of 50 volume% in the particle size distribution. The average particle diameter (D50) may be measured by any suitable method generally used in the art, for example, by a particle size analyzer, by a transmission electron microscopic image, and/or a scanning electron microscopic image. In some embodiments, a dynamic light-scattering measurement device is used to perform a data analysis, and the number of particles is counted for each particle size range. From this, the average particle diameter (D50) value may be easily obtained through a calculation. A laser diffraction method may also be used. If measuring by laser diffraction, for example, the particles to be measured are dispersed in a dispersion medium and then introduced into a commercially available laser diffraction particle size measuring device (e.g., MT 3000 available from Microtrac, Ltd.) using ultrasonic waves at about 28 kHz, and after irradiation with an output of 60 W, the average particle size (D50) based on 50% of the particle size distribution in the measuring device can be calculated.

As used herein, "thickness" may be measured through a picture or image taken with an optical microscope or, for example, a scanning electron microscope.

### Electrode

Some embodiments provide an electrode for a rechargeable lithium battery including a current collector; a conductive coating layer (e.g., an electrically conductive layer) on the current collector; and an active material layer on the conductive coating layer, wherein the conductive coating layer includes a conductive material (e.g., an electrically conductive material), a binder, and a compound including a catechol functional group.

The electrode according to some embodiments can exhibit excellent adhesive strength and conductivity (e.g., electrical conductivity). Accordingly, the rechargeable lithium battery including the electrode according to some embodiments can exhibit excellent cycle-life characteristics by minimizing or reducing an increase in resistance (e.g., electrical resistance) and a decrease in energy density during operation.

Hereinafter, elements constituting the electrode of some embodiments will be described in more detail.

### Conductive Coating Layer

The conductive coating layer may be between the current collector and the active material layer to increase the conductivity (e.g., the electrical conductivity) of the electrode.

The conductive coating layer includes a compound including a catechol functional group, a quinone functional group, or a combination thereof.

The compound including the catechol functional group, quinone functional group, or a combination thereof is a material that exhibits suitable or sufficient adhesive strength even in a small amount. Accordingly, the electrode of some embodiments can exhibit sufficient adhesive strength even if the amount of binder used is reduced, and the conductivity can be improved by increasing the amount of the conductive material used.

In some embodiments, the compound including the catechol functional group, quinone functional group, or combination thereof is a monomolecular compound, and has a weight average molecular weight as measured by gas chromatography mass spectrometry (GC-MS), liquid chromatography mass spectrometry (LC-MS) and/or matrix-assisted laser desorption/ionization time of flight mass spectrometry (MALDI-TOF) method of about 100 g/mol to about 1,000 g/mol, about 1,000 g/mol to about 3,000 g/mol, about 1,200 g/mol to about 2,500 g/mol, or about 1,500 g/mol to about 2,000 g/mol.

For example, the compound including the catechol functional group may include tannic acid, humic acid, pyrogallolic acid, catecholamine, dopamine hydrochloride, 3,4-dihydroxybenzaldehyde, caffeic acid, or a combination thereof. The compound including the catechol functional group may have a feature of being able to induce strong bonding with the polymer compound (e.g., the binder) through multiple hydrogen bonds and/or chemical crosslinking. In some embodiments, the compound including the catechol functional group can be oxidized by oxygen and converted to a quinone functional group.

The compound including the quinone functional group may include humic acid. The quinone functional group can form a strong covalent bond with the amino group or hydroxy group contained in the binder, and even if the amount of binder used in the conductive coating layer is reduced, suitable or sufficient adhesive strength can be secured and resistance (e.g., electrical resistance of the electrode) can be reduced.

The compound including the catechol functional group, quinone functional group, or combination thereof may be included in an amount of about 0.1 wt% to about 15 wt%, about 1 wt% to about 10 wt%, or about 5 wt% to about 7 wt%, based on a total amount of the conductive coating layer. In this way, the compound including the catechol functional group, quinone functional group, or combination thereof can exhibit suitable or sufficient adhesive strength even in a small amount.

### The conductive coating layer includes a binder.

The binder may play a role in adhering the materials in the conductive coating layer to each other and adhering the conductive coating layer to the active material layer. The binder may be a non-water-soluble binder, a water-soluble binder, or a combination thereof.

The water-insoluble binder may include polyvinyl chloride, carboxylated polyvinyl chloride, polyvinyl fluoride, an ethylene oxide-containing polymer, an ethylene propylene copolymer, polystyrene, polyvinylpyrrolidone, polyurethane, polytetrafluoro ethylene, polyvinylidene fluoride, polyethylene, polypropylene, polyamideimide, polyimide, or a combination thereof.

The water-soluble binder may include a rubber binder and/or a polymer resin binder. The rubber binder may be selected from a styrene-butadiene rubber (SBR), an acrylated styrene-butadiene rubber, an acrylonitrile-butadiene rubber (ABR), an acrylic rubber, a butyl rubber, a fluorine rubber, and a combination thereof. The polymer resin binder may be selected from polyethyleneoxide, polyvinylpyrrolidone, polyepichlorohydrin, polyphosphazene, polyacrylonitrile, ethylenepropylenedienecopolymer, polyvinylpyridine, chlorosulfonatedpolyethylene, latex, a polyester resin, an acrylic resin, a phenolic resin, an epoxy resin, polyvinyl alcohol, and a combination thereof.

If a water-soluble binder is used as the binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed together and used. The alkali metal may be Na, K, and/or Li.

The binder may be selected from a rubber-based binder including a styrene-butadiene rubber, an acrylated styrene-butadiene rubber, an acrylonitrile-butadiene rubber, an acrylic rubber, a butyl rubber, a fluorine rubber, or a combination thereof; and a polymer resin binder including carboxymethyl cellulose, chitosan, polyacrylamide, polyethylene imide, polyethylene oxide, polyvinylpyrrolidone, a polyester resin, an acrylic resin, a phenol resin, an epoxy resin, polyallylamine hydrochloride, polyvinyl alcohol, or a combination thereof.

The binder may include two or three types (or kinds) of the aforementioned materials. For example, the binder may include carboxymethyl cellulose as a first binder, chitosan as a second binder, and a styrene-butadiene rubber as a third binder. A mixing ratio thereof is not particularly limited, but based on a total amount of the binder, the binder may include about 5 wt% to about 25 wt% or about 10 wt% to about 20 wt% of carboxylmethyl cellulose as the first binder; about 1 wt% to about 15 wt% or about 5 wt% to about 10 wt% of chitosan as the second binder and styrene-butadiene rubber as the third binder in a balance amount (e.g., the remaining amount is the styrene-butadiene rubber).

The total amount of the binder may be about 10 wt% to about 50 wt%, about 20 wt% to about 40 wt%, or about 35 wt% to about 45 wt% based on a total amount of the conductive coating layer. Compared with other the binders used in an amount of greater than about 50 wt% based on a total amount of the conductive coating layer, even though the binder of embodiments of the present disclosure is used in a relatively smaller amount (e.g., less than 50 wt% based on a total amount of the conductive coating layer), suitable or sufficient adhesive strength may be achieved.

### The conductive coating layer includes a conductive material.

The conductive material may include a dot-shaped, sheet-shaped, and/or linear conductive material, which may have an effect of providing surface roughness and thereby, improving the adhesive strength and providing electrode stability.

In some embodiments, the conductive material may include a carbon material, a metal material, a metal carbide, a metal nitride, a metal silicide, or a combination thereof.

In some embodiments, the carbon material may include carbon black, graphite, carbon fiber, carbon nanotubes (CNTs), L-carbon nanotubes (Long length CNTs), or a combination thereof; the carbon black may include, for example, acetylene black, Ketjen black, channel black, furnace black, lamp black, thermal black, or a combination thereof; and the graphite may include natural graphite, artificial graphite, or a combination thereof. The metal material may be metal particles and/or metal fiber of nickel, and/or the like. The metal carbide may include, for example, WC, B₄C, ZrC, NbC, MoC, TiC, TaC, or a combination thereof, the metal nitride may include, for example, TiN, ZrN, TaN, or a combination thereof, and the metal silicide may include for example WSi₂, MoSi₂ or a combination thereof.

In some embodiments, the conductive material has a D50 a particle diameter of about 1 nm to about 100 nm, about 10 nm to about 80 nm, or about 20 nm to about 50 nm.

In some embodiments, the conductive material, based on the total amount of the conductive coating layer, may be included in an amount of about 10 wt% to about 50 wt%, about 20 wt% to about 40 wt%, or about 30 wt% to about 60 wt%. If the conductive material is used within the foregoing ranges, which is larger than what is used in other electrodes, which is about 30 wt% or more of the conductive material based on the total amount of the conductive coating layer, conductivity (e.g., electrically conductivity) may be improved.

The conductive coating layer may have a thickness of about 800 nm to about 5 µm, for example, about 800 nm to about 15 µm, about 800 nm to about 10 µm, about 800 nm to about 5 µm, or about 900 nm to about 2 µm. Within the foregoing ranges, the electrode according to some embodiments, even though the amount of the binder is reduced, may exhibit suitable or sufficient adhesive strength and because the amount of the conductive material is increased, may improve conductivity (e.g., electrical conductivity).

The electrode in some embodiments may be a positive electrode or a negative electrode. The current collector may be selected from aluminum foil, copper foil, nickel foil, stainless steel foil, titanium foil, nickel foam, copper foam, a polymer substrate coated with a conductive metal (e.g., an electrically conductive metal), and a combination thereof.

In some embodiments, the electrode of some embodiments may be a positive electrode, the current collector may be aluminum foil, and the active material layer may be a positive electrode active material layer.

### Positive Electrode Active Material

The positive electrode active material layer includes a positive electrode active material.

The positive electrode active material may be a compound (lithiated intercalation compound) capable of intercalating and deintercalating lithium. For example, one or more types (or kinds) of composite oxides of lithium and a metal selected from cobalt, manganese, nickel, and a combination thereof can be used.

The composite oxide may be a lithium transition metal composite oxide, and examples thereof may include lithium nickel-based oxide, lithium cobalt-based oxide, lithium manganese-based oxide, a lithium iron phosphate-based compound, cobalt-free lithium nickel-manganese-based oxide, or a combination thereof.

As an example, a compound represented by any of the following chemical formulas may be used. LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c}(0.90≤a≤1.8, 0≤b≤0.5, 0≤c≤0.05); LiₐNi_{1-b-c}Co_{b}X_{c}O_{2-α}D_{α}(0.90≤a≤1.8, 0≤b≤0.5, 0≤c≤0.5, 0<α<2); LiₐNi_{1-b-c}Mn_{b}X_{c}O_{2-α}D_{α}(0.90≤a≤1.8, 0≤b≤0.5, 0≤c≤0.5, 0<α<2); LiₐNi_{b}Co_{c}L¹_{d}GₑO₂(0.90≤a≤1.8, 0≤b≤0.9, 0≤c≤0.5, 0≤d≤0.5, 0≤e≤0.1); LiₐNiG_{b}O₂ (0.90≤a≤1.8, 0.001 ≤b≤0.1); LiₐCoG_{b}O₂(0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li(_{3-f})Fe₂(PO₄)₃(0≤f≤2); LiₐFePO₄(0.90≤a≤1.8).

In the above chemical formulas, A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L¹ is Mn, Al, or a combination thereof.

As an example, the positive electrode active material may have a nickel content of greater than or equal to about 80 mol%, greater than or equal to about 85 mol%, greater than or equal to about 90 mol%, greater than or equal to about 91 mol%, or greater than or equal to about 94 mol% based on 100 mol% of metals excluding lithium in the lithium transition metal composite oxide, and may be a high nickel-based positive electrode active material having a nickel content of less than or equal to about 99 mol% based on 100 mol% of metals excluding lithium in the lithium transition metal composite oxide. The high-nickel-based positive electrode active materials can achieve high capacity and can be applied to high-capacity, high-density rechargeable lithium batteries.

The positive electrode active material may be, for example, lithium composite oxide represented by Chemical Formula 1.

Chemical Formula 1 LiₐCoO_{2-c}D_{c}

In Chemical Formula 1, D is selected from O, F, S, P, and a combination thereof; 0.90 ≤ a ≤ 1.8, and 0 ≤ c ≤ 0.05.

In some embodiments, the positive electrode active material may be a lithium composite oxide represented by Chemical Formula 2.

Chemical Formula 2 LiCoO₂

### Positive Electrode

The positive electrode for a rechargeable lithium battery may include a current collector and a positive electrode active material layer on the current collector. The positive electrode active material layer may include a positive electrode active material and may further include a binder and/or a conductive material (e.g., an electrically conductive material).

For example, the positive electrode may further include an additive that can function as a sacrificial positive electrode.

A content of the positive electrode active material may be about 90 wt% to about 99.5 wt% based on 100 wt% of the positive electrode active material layer and a content of the binder and the conductive material may be about 0.5 wt% to about 5 wt%, respectively, based on 100 wt% of the positive electrode active material layer.

The binder serves to attach the positive electrode active material particles well to each other and also to attach the positive electrode active material well to the current collector. Examples of the binder may include polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like, as non-limiting examples.

The conductive material may be used to impart conductivity (e.g., electrical conductivity) to the electrode. Any material that does not cause chemical change (e.g., does not cause an undesirable chemical change in the rechargeable lithium battery) and conducts electrons can be used in the battery. Examples of the conductive material may include a carbon-based material such as natural graphite, artificial graphite, carbon black, acetylene black, ketjen black, a carbon fiber, a carbon nanofiber, and carbon nanotube; a metal-based material containing copper, nickel, aluminum, silver, etc., in a form of a metal powder and/or a metal fiber; a conductive polymer (e.g., an electrically conductive polymer) such as a polyphenylene derivative; or a mixture thereof.

Al may be used as the current collector, but is not limited thereto.

### Rechargeable Lithium Battery

Some embodiments provide a rechargeable lithium battery including a positive electrode, a negative electrode, a separator between the positive electrode and the positive electrode, and an electrolyte. Herein, the rechargeable lithium battery may be one in which the electrode according to the aforementioned embodiment is applied only to the positive electrode, only to the negative electrode, or may be applied to both the positive electrode and the negative electrode.

The electrode of the aforementioned embodiment can exhibit suitable or sufficient adhesive strength even if the amount of binder used is reduced, and the conductivity can be improved by increasing the amount of the conductive material used.

Furthermore, because the rechargeable lithium battery of some embodiments has the electrode of the aforementioned embodiments, an increase in resistance (e.g., electrical resistance) and a decrease in energy density during battery operation is minimized or reduced, and thus can exhibit excellent cycle-life characteristics.

### Negative Electrode Active Material

The negative electrode active material may be a material that reversibly intercalates/deintercalates lithium ions, a lithium metal, a lithium metal alloy, a material capable of doping and dedoping lithium, and/or a transition metal oxide.

The material that reversibly intercalates/deintercalates lithium ions may include a carbon-based negative electrode active material, for example, crystalline carbon, amorphous carbon, or a combination thereof. The crystalline carbon may be graphite such as irregular-shaped, sheet-shaped, flake-shaped, sphere-shaped, and/or fiber-shaped natural graphite and/or artificial graphite. The amorphous carbon may be a soft carbon, a hard carbon, a mesophase pitch carbonization product, calcined coke, and/or the like.

The lithium metal alloy may include lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material and/or a Sn-based negative electrode active material. The Si-based negative electrode active material may include silicon, a silicon-carbon composite, SiOₓ (0 < x < 2), a Si-Q alloy (where Q is selected from an alkali metal, an alkaline-earth metal, a Group 13 element, a Group 14 element (excluding Si), a Group 15 element, a Group 16 element, a transition metal, a rare earth element, and a combination thereof), or a combination thereof. The Sn-based negative electrode active material may include Sn, SnO₂, a Sn-based alloy, or a combination thereof.

The silicon-carbon composite may be a composite of silicon and amorphous carbon. According to some embodiments, the silicon-carbon composite may be in a form of silicon particles and amorphous carbon coated on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may exist dispersed in an amorphous carbon matrix.

The silicon-carbon composite may further include crystalline carbon. For example, the silicon-carbon composite may include a core including crystalline carbon and silicon particles and an amorphous carbon coating layer on a surface of the core.

The Si-based negative electrode active material and/or the Sn-based negative electrode active material may be used in combination with a carbon-based negative electrode active material.

### Negative Electrode

A negative electrode for a rechargeable lithium battery includes a current collector and a negative electrode active material layer on the current collector. The negative electrode active material layer includes a negative electrode active material and may further include a binder and/or a conductive material (e.g., an electrically conductive material).

For example, the negative electrode active material layer may include about 90 wt% to about 99 wt% of the negative electrode active material, about 0.5 wt% to about 5 wt% of the binder, and about 0 wt% to about 5 wt% of the conductive material.

The binder may serve to attach the negative electrode active material particles well to each other and also to attach the negative electrode active material well to the current collector. The binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and a combination thereof.

If an aqueous binder is used as the negative electrode binder, it may further include a cellulose-based compound capable of imparting or increasing viscosity. The cellulose-based compound may include one or more of carboxylmethyl cellulose, hydroxypropylmethyl cellulose, methyl cellulose, and/or alkali metal salts thereof. The alkali metal may be Na, K, and/or Li.

The dry binder may be a polymer material capable of being fiberized, and may be, for example, polytetrafluoroethylene, polyvinylidene fluoride, polyvinylidene fluoride-hexafluoropropylene copolymer, polyethylene oxide, or a combination thereof.

The conductive material is included to provide electrode conductivity (e.g., electrical conductivity), and any suitable electrically conductive material may be used as the conductive material unless it causes a chemical change (e.g., an undesirable chemical change in the battery). Examples of the conductive material may be a carbon-based material such as natural graphite, artificial graphite, carbon black, acetylene black, ketjen black, a carbon fiber, a carbon nanofiber, a carbon nanotube, and the like; a metal-based material such as copper, nickel, aluminum silver, and the like in a form of a metal powder and/or a metal fiber; a conductive polymer (e.g., an electrically conductive polymer) such as a polyphenylene derivative; or a mixture thereof.

The negative electrode current collector may include one selected from a copper foil, a nickel foil, a stainless steel foil, a titanium foil, a nickel foam, a copper foam, a polymer substrate coated with a conductive metal (e.g., an electrically conductive metal), and a combination thereof, but is not limited thereto.

### Electrolyte

The electrolyte for a rechargeable lithium battery contains a non-aqueous organic solvent and a lithium salt.

The non-aqueous organic solvent serves as a medium for transmitting ions taking part in the electrochemical reaction of a battery.

The non-aqueous organic solvent may be a carbonate-based, ester-based, ether-based, ketone-based, alcohol-based solvent, aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like. The ester-based solvent may include methyl acetate, ethyl acetate, n-propyl acetate, dimethylacetate, methylpropionate, ethylpropionate, decanolide, mevalonolactone, valerolactone(valerolactone), caprolactone, and/or the like. The ether-based solvent may include dibutyl ether, tetraglyme, diglyme, dimethoxyethane, 2-methyltetrahydrofuran, 2,5-dimethyltetrahydrofuran, tetrahydrofuran, and/or the like. The ketone-based solvent may include cyclohexanone. The alcohol-based solvent may include ethyl alcohol, isopropyl alcohol, and/or the like, and the aprotic solvent may include nitriles such as R-CN (wherein R is a C2 to C20 linear, branched, or cyclic hydrocarbon group, a double bond, an aromatic ring, or an ether group), amides such as dimethylformamide, dioxolanes such as 1,3-dioxolane and/or 1,4-dioxolane, sulfolanes, and/or the like.

The non-aqueous organic solvent may be used alone or as a mixture of two or more.

In some embodiments, if using a carbonate-based solvent, cyclic carbonate and chain carbonate can be mixed together and used, and cyclic carbonate and chain carbonate can be mixed together at a volume ratio of about 1:1 to about 1:9.

The lithium salt dissolved in the organic solvent supplies lithium ions in a battery, enables a basic operation of a rechargeable lithium battery, and improves transportation of the lithium ions between positive and negative electrodes. Examples of a lithium salt may include one or more than one selected from LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂) (x and y are integers from 1 to 20), lithium trifluoromethane sulfonate, lithium tetrafluoroethanesulfonate, lithium difluorobis(oxalato)phosphate, (LiDFOB), and lithium bis(oxalato)borate (LiBOB).

### Separator

Depending on the type (or kind) of the rechargeable lithium battery, a separator may be present between the positive electrode and the negative electrode. The separator may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and/or the like.

The separator may include a porous substrate and a coating layer including an organic material, an inorganic material, or a combination thereof on one or both surfaces (e.g., two opposing surfaces) of the porous substrate.

The porous substrate may be a polymer film formed of any one selected from polyolefin polymers such as polyethylene and polypropylene, polyester such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, and/or a copolymer or mixture of two or more thereof.

The organic material may include a polyvinylidene fluoride-based polymer and/or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiOs, BaTiOs, Mg(OH)₂, boehmite, and a combination thereof, but is not limited thereto.

The organic material and the inorganic material may be mixed together in one coating layer, or a coating layer including an organic material and a coating layer including an inorganic material may be stacked.

### Rechargeable Lithium Battery

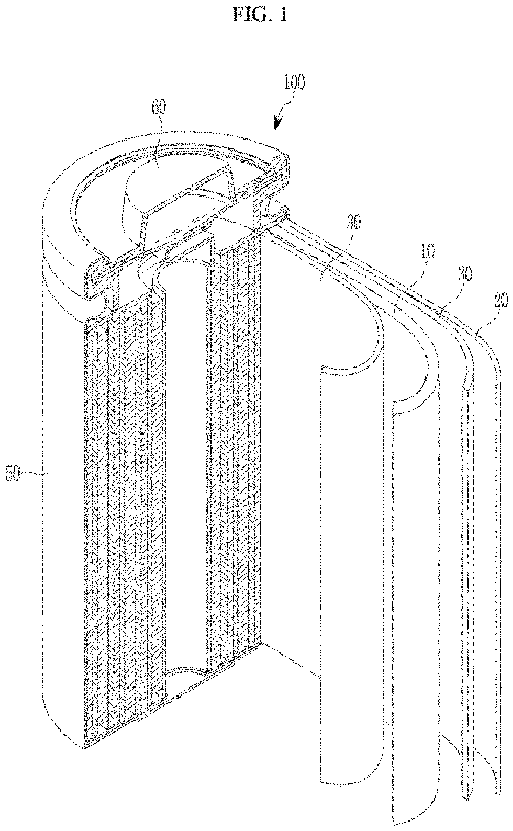

The rechargeable lithium battery may be classified into cylindrical, prismatic, pouch, or coin-type batteries, and the like depending on the shape thereof. FIG. 1 is a schematic view showing a rechargeable lithium battery according to some embodiments, which may be in a form of a cylindrical battery. Referring to FIG. 1, the rechargeable lithium battery 100 includes an electrode assembly with a separator 30 interposed between a positive electrode 10 and a negative electrode 20, and a case 50 in which the electrode assembly is housed. The positive electrode 10, negative electrode 20, and separator 30 may be impregnated with an electrolyte. The rechargeable lithium battery 100 may include a sealing member 60 that seals the case 50 as shown in FIG. 1.

The rechargeable lithium battery according to some embodiments may be applied to automobiles, mobile phones, and/or various suitable types (or kinds) of electrical devices, but the present disclosure is not limited thereto.

Hereinafter, examples and comparative examples of the present disclosure will be described. The following examples are only examples of the present disclosure, and the present disclosure is not limited to the following examples.

### Preparation Example 1-1: Preparation of Conductive Slurry

As a compound including a catechol functional group, tannic acid having a weight average molecular weight (Mw) of 1,701 g/mol, which was measured by using a GC-MS, LC-MS, or MALDI-TOF method, was used.

5 wt% of the tannic acid, 35 wt% of carbon black particles having D50 a particle diameter of 30 nm as a conductive material, 10 wt% of carboxylmethyl cellulose as a first binder, 5 wt% of chitosan as a second binder, and 45 wt% of styrene-butadiene rubber as a third binder were mixed together in an aqueous solvent to prepare a conductive slurry.

### Preparation Example 1-2: Preparation of Conductive Slurry

A conductive slurry was prepared in the same manner as in Preparation Example 1-1 except that 3,4-dihydroxy benzoaldehyde was used instead of the tannic acid.

### Preparation Example 1-3: Preparation of Conductive Slurry

A conductive slurry was prepared in the same manner as in Preparation Example 1-1 except that dopamine hydrochloride was used instead of the tannic acid.

### Preparation Example 1-4: Preparation of Conductive Slurry

A conductive slurry was prepared in the same manner as in Preparation Example 1-1 except that the content of the tannic acid was increased to 7 wt%, while the content of the conductive material was reduced to 32 wt%.

### Preparation Example 1-5: Preparation of Conductive Slurry

A conductive slurry was prepared in the same manner as in Preparation Example 1-2 except that the content of the 3,4-dihydroxy benzoaldehyde was increased to 7 wt%, while the content of the conductive material was reduced to 32 wt%.

### Preparation Example 1-6: Preparation of Conductive Slurry

A conductive slurry was prepared in the same manner as in Preparation Example 1-3 except that the content of the dopamine hydrochloride was increased to 7 wt%, while the content of the conductive material was reduced to 32 wt%.

### Comparative Preparation Example 1-1: Preparation of Conductive Slurry

A conductive slurry was prepared by mixing together 35 wt% of carbon black particles having a D50 particle diameter of 30 nm as a conductive material, 10 wt% of carboxylmethyl cellulose as a first binder, 5 wt% of chitosan as a second binder, and 50 wt% of a styrene-butadiene rubber as a third binder in an aqueous solvent.

### Comparative Preparation Example 1-2: Preparation of Conductive Slurry

A conductive slurry was prepared by mixing together 30 wt% of carbon black particles having a D50 particle diameter of 30 nm as a conductive material, 10 wt% of carboxylmethyl cellulose as a first binder, 5 wt% of chitosan as a second binder, and 55 wt% of a styrene-butadiene rubber as a third binder in an aqueous solvent.

### Preparation Example 2: Preparation of Positive Electrode Active Material Slurry

LiCoO₂ having a D50 particle diameter of 17 µm as a positive electrode active material was used.

A positive electrode active material slurry was prepared by mixing 95 together wt% of LiCoO₂ as the positive electrode active material, 3 wt% of polyvinylidene fluoride as a binder, and 2 wt% of ketjen black as a conductive material in an N-methylpyrrolidone solvent.

### Example 1

### (1) Manufacture of Positive Electrode

The conductive slurry of Preparation Example 1-1 was coated on one surface of an aluminum current collector and dried to form a 1 µm-thick conductive coating layer. On the conductive coating layer, the positive electrode active material slurry of Preparation Example 2 was coated and dried to form a 100 µm-thick positive electrode active material layer.

### (2) Manufacture of Negative Electrode

97.3 wt% of artificial graphite as a negative electrode active material, 0.5 wt% of Denka black, 0.9 wt% of carboxymethyl cellulose, and 1.3 wt% of a styrene butadiene rubber were mixed together in an aqueous solvent to prepare negative electrode active material slurry. This negative electrode active material slurry was coated on a copper foil and dried to form a negative electrode active material layer.

### (3) Manufacture of Rechargeable Lithium Battery Cell

The positive electrode, a separator with a polyethylene/polypropylene multilayer structure, and the negative electrode were sequentially stacked to form a pouch-type cell, and an electrolyte prepared by adding 1.0 M of LiPF₆ lithium salt to a solvent of ethylene carbonate and diethyl carbonate mixed together in a volume ratio of 50:50 was injected thereinto to manufacture a rechargeable lithium battery cell.

### Example 2

A positive electrode and a rechargeable lithium battery cell including the same were manufactured in the same manner as in Example 1 except that the conductive slurry of Preparation Example 1-2 was used.

### Example 3

A positive electrode and a rechargeable lithium battery cell including the same were manufactured in the same manner as in Example 1 except that the conductive slurry of Preparation Example 1-3 was used.

### Example 4

A positive electrode and a rechargeable lithium battery cell including the same were manufactured in the same manner as in Example 1 except that the conductive slurry of Preparation Example 1-4 was used.

### Example 5

A positive electrode and a rechargeable lithium battery cell including the same were manufactured in the same manner as in Example 1 except that the conductive slurry of Preparation Example 1-5 was used.

### Example 6

A positive electrode and a rechargeable lithium battery cell including the same were manufactured in the same manner as in Example 1 except that the conductive slurry of Preparation Example 1-6 was used.

### Comparative Example 1

A positive electrode and a rechargeable lithium battery cell including the same were manufactured in the same manner as in Example 1 except that the conductive slurry of Comparative Preparation Example 1-1 was used.

### Comparative Example 2

A positive electrode and a rechargeable lithium battery cell including the same were manufactured in the same manner as in Example 1 except that the conductive slurry of Comparative Preparation Example 1-2 was used.

### Evaluation Example 1: Evaluation of positive electrode adhesive strength

Each of the positive electrodes of Examples 1 to 6 and Comparative Examples 1 and 2 was prepared as a specimen by attaching a tape onto the positive electrode active material layer and then, measured with respect to strength with UTM (Instron 5543), while peeling off the positive electrode active material layer. The strength measurement results are given as adhesive strength in Table 1.

**(Table 1)**

| | Adhesive strength (gf/mm) |
|---|---|
| Example 1 | 15.1 |
| Example 2 | 14.7 |
| Example 3 | 14.3 |
| Example 4 | 14.2 |
| Example 5 | 14.0 |
| Example 6 | 13.8 |
| Comparative Example 1 | 13.6 |
| Comparative Example 2 | 14.5 |

Referring to Table 1, Examples 1 to 6, into which a compound including a catechol functional group, a quinone functional group, or a combination thereof was introduced to reduce the binder content in the conductive coating layer, secured satisfactory positive electrode adhesive strength.

### Evaluation Example 2: Evaluation of room-temperature resistance and cycle-life characteristics of rechargeable lithium battery cell

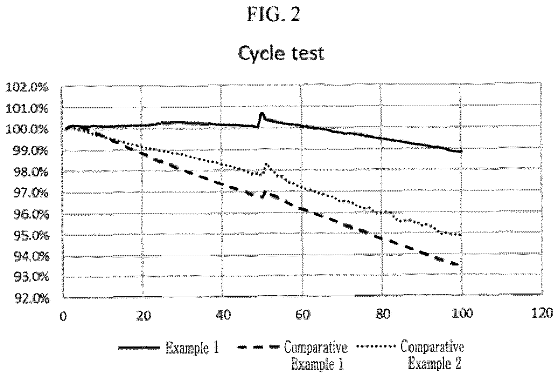

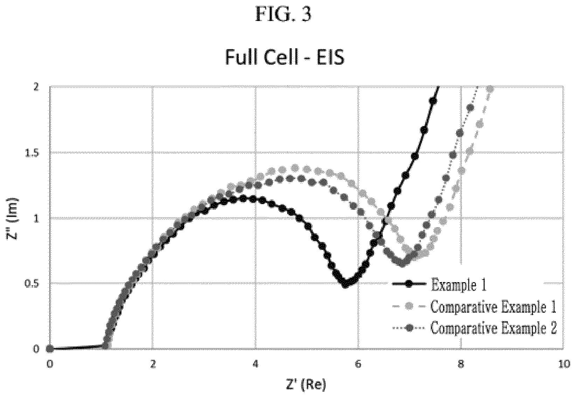

Each of the rechargeable lithium battery cells according to Example 1 and Comparative Examples 1 and 2 was constant current-charged at a rate of 0.5 C to a voltage of 4.25 V and subsequently, cut off at a rate of 0.02 C, while maintaining 4.25 V in a constant voltage mode at room temperature (25 °C). Subsequently, the cells were discharged to a voltage of 2.8 V at a rate of 0.5 C, and this charge and discharge cycle was 100 times repeated. Capacity of the cells according to the number of cycles was measured and shown in FIG. 2, and electrochemical impedance spectroscopy (EIS) results measured at room temperature after the charge were shown in FIG. 3.

Referring to FIGS. 2 and 3, the rechargeable lithium battery cell of Example 1 exhibited excellent cycle-life characteristics by minimizing or reducing the increase in resistance (e.g., electrical resistance) and the decrease in energy density during the operation.

The rechargeable lithium battery cells of Example 1 to 6 according to some embodiments, included a compound including a catechol functional group, a quinone functional group, or a combination thereof, and thus, a material capable of exhibiting sufficient adhesive strength even in a small amount was introduced into the rechargeable lithium battery cells, and were determined to achieve sufficient adhesive strength even though the amount of the binder was reduced, and were determined to also improve conductivity by increasing the amount of the conductive material.

While the subject matter of this disclosure has been described in connection with what is presently considered to be practical exemplary embodiments, it is to be understood that the present disclosure is not limited to the disclosed embodiments, but, on the contrary, is intended to cover various modifications and equivalent arrangements included within the spirit and scope of the appended claims, and equivalents thereof.

### Description of Symbols

100: rechargeable lithium battery
10: positive electrode
20: negative electrode
30: separator
50: case
60: sealing member

## Claims

1. An electrode for a rechargeable lithium battery (100), comprising:
a current collector;
a conductive coating layer on the current collector; and
an active material layer on the conductive coating layer,
wherein the conductive coating layer comprises:
a conductive material;
a binder; and
a compound comprising a catechol functional group, a quinone functional group, or a combination thereof.

2. The electrode as claimed in claim 1, wherein:
the compound comprising the catechol functional group, quinone functional group, or combination thereof is a monomolecular compound.

3. The electrode as claimed in claim 1 or claim 2, wherein:
the compound comprising the catechol functional group includes tannic acid, humic acid, pyrogallolic acid, catecholamine, dopamine hydrochloride, 3,4-dihydroxybenzaldehyde, caffeic acid, or a combination thereof.

4. The electrode as claimed in any one of claims 1 to 3, wherein:
the compound comprising the quinone functional group comprises humic acid.

5. The electrode as claimed in any one of claims 1 to 4, wherein:
The compound comprising the catechol functional group is included in an amount of about 0.1 wt% to about 15 wt% based on a total amount of the conductive coating layer.

6. The electrode as claimed in any one of claims 1 to 5, wherein:
the binder comprises:
a rubber-based binder comprising a styrene-butadiene rubber, an acrylated styrene-butadiene rubber, an acrylonitrile-butadiene rubber, an acrylic rubber, a butyl rubber, a fluorine rubber, or a combination thereof; and
a polymer resin binder comprising carboxymethyl cellulose, chitosan, polyacrylamide, polyethylene imide, polyethylene oxide, polyvinylpyrrolidone, a polyester resin, an acrylic resin, a phenol resin, an epoxy resin, polyallylamine hydrochloride, polyvinyl alcohol, or a combination thereof.

7. The electrode as claimed in any one of claims 1 to 6, wherein:
the binder is included in an amount of about 10 wt% to about 50 wt% based on a total amount of the conductive coating layer.

8. The electrode as claimed in any one of claims 1 to 7, wherein:
the conductive material comprises a carbon material, a metal material, a metal carbide, a metal nitride, a metal silicide, or a combination thereof.

9. The electrode as claimed in any one of claims 1 to 8, wherein:
the conductive material is included in an amount of about 10 wt% to about 50 wt% based on a total amount of the conductive coating layer.

10. The electrode as claimed in any one of claims 1 to 9, wherein:
a thickness of the conductive coating layer is about 800 nm to about 5 µm.

11. The electrode as claimed in any one of claims 1 to 10, wherein:
the current collector comprises an aluminum foil.

12. The electrode as claimed in any one of claims 1 to 11, wherein:
the active material layer comprises an electrode active material represented by Chemical Formula 1:
[Chemical Formula 1] LiₐCoO_{2-c}D_{c}
wherein, in Chemical Formula 1,
D is selected from O, F, S, P, and a combination thereof; and
0.90 ≤ a ≤ 1.8, 0 ≤ c ≤ 0.05.

13. The electrode as claimed in any one of claims 1 to 12, wherein:
the active material layer further comprises a conductive material and a binder, and
the conductive material and binder of the active material layer are the same as or different from the conductive material and binder of the conductive coating layer, respectively.

14. A rechargeable lithium battery (100) comprising the electrode for a rechargeable lithium battery (100) as claimed in any one of claims 1 to 13.

15. The rechargeable lithium battery (100) as claimed in claim 14, further comprising:
an electrolyte and a separator (30).
